# FASCICULE DE BREVET EUROPEEN

(11) **EP 1 094 958 B1**
(45) Date de publication et mention de la délivrance du brevet: **21.09.2005**
(21) Numéro de dépôt: 99932742.2
(22) Date de dépôt: 28.06.1999
(51) Int. Cl.: B60C 23/06, B60C 17/04, B60C 23/04, B60C 19/00, B60B 21/02

(54) **PROCEDE ET DISPOSITIF DE DETECTION D'UNE CONDITION DE ROULAGE A PLAT D'UN PNEUMATIQUE-INSERTS, ROUES ET PNEUMATIQUES CON US POUR CE PROCEDE**
VERFAHREN UND VORRICHTUNG ZUR ERMITTLUNG EINER REIFENPLATTLAUFSITUATION - SICHERHEITSTRÄGER,RÄDER UND REIFEN DAFÜR HERGESTELLT
METHOD AND DEVICE FOR DETECTING A TYRE FLAT RUNNING CONDITION, INSERTS, WHEELS AND TYRES THEREFOR

(30) Priorité: 06.07.1998 FR 9808655
(43) Date de publication de la demande: 02.05.2001
(73) Titulaire: MICHELIN RECHERCHE ET TECHNIQUE S.A., 1763 Granges-Paccot (CH); Société de Technologie Michelin, 63000 Clermont-Ferrand Cedex 09 (FR)
(72) Inventeur: DOSJOUB, André, F-63400 Chamalières (FR); DUFOURNIER, Arnaud, F-63100 Clermont-Ferrand (FR)
(74) Mandataire: Dequire, Philippe Jean-Marie Denis
(86) Numéro de dépôt international: PCT/EP1999/004464
(87) Numéro de publication internationale: WO 2000/001545

(56) Documents cités:
- EP-A- 0 788 901
- EP-A- 0 844 111
- WO-A-94/03338
- FR-A- 2 762 260
- US-A- 4 262 724
- US-A- 5 760 682
- PATENT ABSTRACTS OF JAPAN vol. 017, no. 377 (M-1446), 15 juillet 1993 (1993-07-15) & JP 05 065004 A (BRIDGESTONE CORP), 19 mars 1993 (1993-03-19)
- PATENT ABSTRACTS OF JAPAN vol. 1998, no. 11, 30 septembre 1998 (1998-09-30) & JP 10 151920 A (SUMITOMO ELECTRIC IND LTD;SUMITOMO RUBBER IND LTD), 9 juin 1998 (1998-06-09)
- PATENT ABSTRACTS OF JAPAN vol. 003, no. 108 (M-072), 11 septembre 1979 (1979-09-11) & JP 54 083201 A (BRIDGESTONE CORP), 3 juillet 1979 (1979-07-03)

## Description

L'invention concerne un procédé et un dispositif de détection d'une condition de roulage à plat d'un pneumatique d'un véhicule.

Lorsqu'un ensemble monté - ensemble pneumatique et roue - comporte des moyens de support de la bande de roulement du pneumatique en cas de roulage à plat, ces moyens de support permettent d'éviter une immobilisation forcée du véhicule en cas de perte grave de pression d'air dans le pneumatique. Ces moyens de support peuvent être un insert de sécurité disposé radialement extérieurement relativement à la jante de la roue de l'ensemble monté ou des éléments de renfort disposés à l'intérieur de la structure des flancs et/ou des bourrelets du pneumatique. De tels pneumatiques sont appelés des « auto-porteurs ».

La mise en appui du pneumatique sur ces moyens de support s'accompagne d'une dégradation plus ou moins marquée de ses performances, qui peut ne pas être perceptible par le conducteur à travers le comportement et le confort du véhicule. De plus, la durée de vie en fonctionnement de ces moyens de support est limitée. Il est donc utile que le conducteur soit averti dès qu'un pneumatique est en appui sur ses moyens de support, pour qu'il puisse se conformer aux instructions de leur fabricant.

La demande de brevet WO 94/03338 propose un dispositif de détection de la mise en appui d'un pneumatique sur un insert de sécurité. Ce dispositif comprend un accéléromètre par roue, placé sur l'un des éléments de suspension de la roue et mesurant les accélérations verticales relié à une unité centrale de traitement. L'analyse est basée sur la détection de l'apparition lors de la mise en appui d'un mode de résonance du système constitué par le pneumatique en appui sur l'insert de sécurité, par les masses non suspendues et par les ressorts de suspension. Ce mode de résonance est caractéristique du roulage en appui et est situé au-delà de 100 hertz.

Cependant, pour certains appuis de sécurité, par exemple réalisés en matériau élastomérique, la sensibilité de l'analyse précédente peut s'avérer insuffisante.

Le document US 5 760 682 présente un procédé de détection du sous-gonflage de l'un des pneumatiques d'un véhicule par l'analyse de la variance des vitesses de rotation des quatre roues du véhicule.

Le document EP 0 844 111 A1 divulgue un appui de sécurité tel que son rayon de roulement sous appui est variable avec une fréquence de variation sensiblement égale à sa fréquence de rotation pour créer une vibration de fréquence égale à cette fréquence de rotation et ainsi alerter le conducteur du véhicule.

Le document WO 98/47728 (Art. 54(3) et (4) CBE) divulgue un procédé selon le préambule de la revendication 1.

Dans le cas d'ensembles montés ne comprenant pas les moyens de support précédents, lors d'une condition de roulage à plat, la bande de roulement vient s'appuyer sur les bourrelets et les crochets de jantes. Cela peut entraîner une déchéance rapide du pneumatique et une chute des bourrelets dans la gorge de montage de la jante, sans parler de la dégradation du comportement du véhicule. Dès qu'un tel appui intervient, il est aussi très utile d'avertir le conducteur.

Dans ce qui suit, on entend par « condition de roulage à plat » d'un pneumatique, un roulage lorsque la pression d'air dans le pneumatique n'est plus suffisante pour assurer la portance par le pneumatique de la charge du véhicule. La bande de roulement du pneumatique vient alors en appui sur des éléments de support. Ces éléments de support peuvent être prévus à cet effet (tels des inserts de sécurité disposés autour de la jante), ou non (crochets de jante...).

L'invention a pour objet un procédé de détection d'une condition de roulage à plat d'un pneumatique d'un véhicule, le pneumatique étant monté sur une roue, dont la sensibilité et la fiabilité sont améliorées.

Le procédé de détection selon l'invention est tel que :
- on capte une grandeur f(α,t) qui varie avec le déplacement angulaire de la roue dans le temps ;
- on élabore, à partir de cette grandeur, des signaux de mesure qui varient avec la vitesse angulaire de la roue dα(t)/dt ;
- on calcule une grandeur caractéristique de la dispersion des signaux de mesure ;
- on déclenche une alarme lorsque la grandeur caractéristique satisfait une relation donnée.

Ce procédé est caractérisé en ce que, pour déterminer la grandeur caractéristique de la dispersion des signaux de mesure :
- on déterrnine la fréquence de rotation de la roue ;
- on calcule l'énergie des signaux de mesure dans au moins une bande étroite de fréquence centrée sur l'un des premiers harmoniques de ladite fréquence de rotation au-delà de ladite fréquence de rotation et premier harmonique ladite grandeur f(h,t) est captée au moyen d'un capteur de déplacement angulaire de ladite roue; et
- on déclenche une alarme lorsque ladite énergie satisfait une relation donnée.

La fréquence de rotation de la roue peut être déterminée à partir des signaux de mesure.

La demanderesse a en effet constaté de façon très surprenante que l'analyse de la dispersion des vitesses de rotation des roues met en évidence des changements notables lors d'une condition de roulage à plat d'un pneumatique, c'est-à-dire lorsque la bande de roulement s'appuie contre un élément de support quelconque. Ce procédé a l'avantage de ne pas nécessiter, comme dans les procédés précédemment connus, des capteurs spécifiques tels des accéléromètres, mais au contraire peut utiliser de simples mesures de rotation angulaire des roues. Ces mesures sont souvent déjà disponibles comme dans le cas de véhicules équipés de dispositifs anti-blocage des roues.

De plus, dès la mise en appui de la bande de roulement d'un pneumatique en condition de roulage à plat sur un élément de support quelconque, ce procédé de détection est très sensible et très fiable parce que la demanderesse a constaté que l'énergie des de mesure varie préférentiellement dans les bandes de fréquence centrées sur les différents harmoniques du tour de roue.

Ce procédé de détection analyse préférentiellement l'évolution de l'énergie du spectre des vitesses dans au moins deux bandes étroites de fréquences centrées sur des harmoniques du tour de roue, à l'exception de l'harmonique 1.

Avantageusement, après avoir détecté que la somme des énergies des signaux de mesure dans au moins deux bandes étroites de fréquence centrées chacune sur l'un des premiers harmoniques satisfait une relation donnée, on compare l'énergie des signaux de mesure dans chacune de ces bandes de fréquence à un seuil correspondant donné et on déclenche une alarme lorsque, pour deux au moins de ces bandes de fréquences, l'énergie des signaux est supérieure au seuil correspondant.

Ce test complémentaire a l'avantage de limiter l'influence des perturbations éventuelles, telles celles dues aux vibrations du moteur. En effet, de telles perturbations sont usuellement limitées à une seule bande de fréquence.

L'analyse peut être menée roue par roue ou en comparant les roues entre elles. La comparaison roue par roue a l'avantage de permettre d'identifier le pneumatique en condition de roulage à plat. En revanche la comparaison entre plusieurs roues fiabilise la détection. L'analyse peut aussi utiliser des signaux de mesure qui varient avec l'accélération angulaire des roues d²α(t)/dt.

Pour éviter des fausses alarmes, il est avantageux de suivre aussi l'évolution de l'énergie des signaux de mesure dans au moins une seconde bande de fréquence où les signaux de mesure sont substantiellement indépendants de la condition de roulage à plat et de ne pas déclencher une alarme lorsque l'énergie de mesure dans ces secondes bandes de fréquence dépasse un seuil donné.

De telles secondes bandes de fréquence sont de préférence situées en dehors des fréquences multiples de la fréquence de rotation des roues.

On peut aussi ne pas déclencher d'alarme lorsque la vitesse du véhicule est inférieure à un seuil donné.

L'invention a aussi pour objet un dispositif de détection d'une condition de roulage à plat d'un pneumatique d'un véhicule, le pneumatique étant monté sur une roue, comportant :
- des premiers moyens pour capter une grandeur f(α,t) qui varie avec le déplacement angulaire de la roue dans le temps ;
- des seconds moyens pour mettre en oeuvre le procédé selon l'invention;
- des troisièmes moyens pour transmettre au conducteur du véhicule cette alarme ; et
- des quatrièmes moyens disposés dans l'ensemble monté pneumatique/roue pour générer des signaux vibratoires avertisseurs générant au moins au fonction sinusoïdale dont la période est un sous-multiple du tour de roue lors d'un roulage à plat du pneumatique.

De tels signaux sont aisément détectés par le dispositif selon l'invention, même dans le cas où ces moyens génèrent sensiblement seulement une seule fonction sinusoïdale dont la période est un sous-multiple du tour de roue.

Ces moyens avertisseurs peuvent appartenir au pneumatique, à la roue ou à un insert de sécurité disposé radialement extérieurement relativement à la roue.

Plusieurs modes de réalisation sont maintenant décrits, à titre non limitatif, au moyen du dessin annexé dans lequel :
- la figure 1 représente, en coupe axiale, un ensemble monté équipé d'un insert de sécurité ;
- les figures 2a et 2b représentent schématiquement, en vue de côté, un premier mode de réalisation d'insert de sécurité selon l'invention ;
- la figure 3 représente l'évolution de l'inclinaison longitudinale de barrettes axiales de l'insert de la figure 2b en fonction de l'azimut ;
- la figure 4 représente, en coupe méridienne, un schéma d'un second insert avec une variation de rayon extérieur ;
- la figure 5 représente, en coupe méridienne, un schéma d'un troisième insert avec une variation de raideur radiale ;
- la figure 6 représente, en coupe méridienne, un schéma d'un quatrième insert avec une combinaison de variations de raideur radiale et de rayon extérieur ;
- la figure 7 représente schématiquement un dispositif de détection selon l'invention;
- la figure 8 représente un schéma de principe du procédé de détection selon l'invention ;
- la figure 9 représente deux spectres des signaux de mesure en fonction de la fréquence en condition de roulage gonflé et à plat sur une route usuelle ;

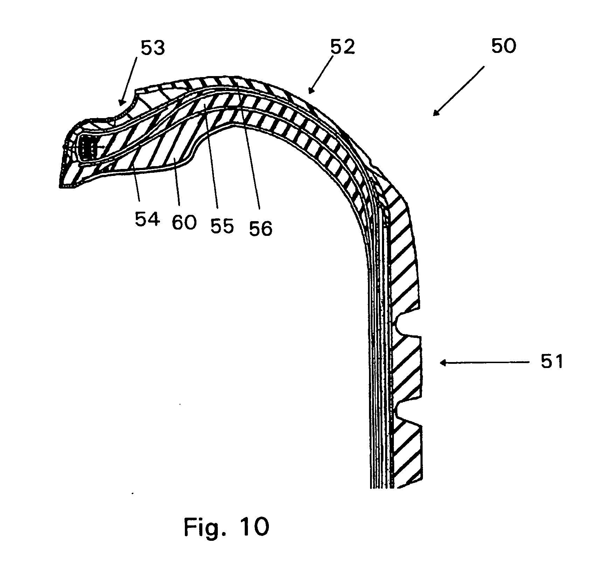

- la figure 10 représente, en demi-coupe axiale, un pneumatique selon l'invention;
- la figure 11 représente l'évolution en fonction de l'azimut de la hauteur radiale d'un renfort du pneumatique ;
- la figure 12 représente, en coupe axiale, une roue selon l'invention;
- la figure 13 représente, en vue du côté intérieur, la roue de la figure 9 ; et
- la figure 14 représente l'évolution en fonction de l'azimut de la hauteur radiale du crochet intérieur de la roue des figures 12 et 13.

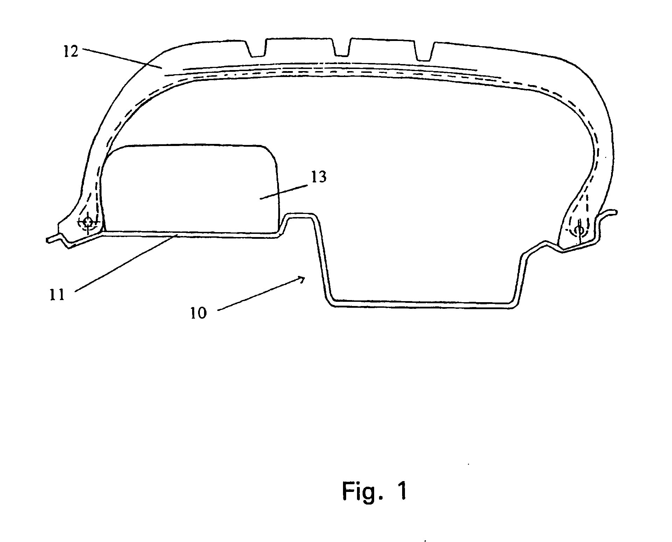

On voit à la figure 1 une jante 10 de roue équipée d'un insert annulaire de sécurité 13 reposant sur la portée 11 de la jante 10. La géométrie particulière de cette jante 10 de roue est notamment décrite dans la demande de brevet français n° 2 713 558. Elle représente deux sièges de bourrelets de diamètres différents et est particulièrement adaptée pour la mise en place aisée de cet insert de sécurité 13. Cet ensemble permet le roulage malgré une baisse de pression importante dans le pneumatique 12. Dans le cas d'un tel roulage, l'intérieur du pneu déformé frotte sur la surface extérieure de l'insert provoquant un échauffement qui limite le rayon d'action disponible : il importe donc que le conducteur soit informé dès la mise en appui d'un pneumatique sur son insert 13.

A cet effet, on utilise avantageusement comme insert un insert de sécurité comportant des moyens pour générer des signaux vibratoires avertisseurs harmoniques du tour de roue (c'est-à-dire de la fréquence de rotation du pneumatique).

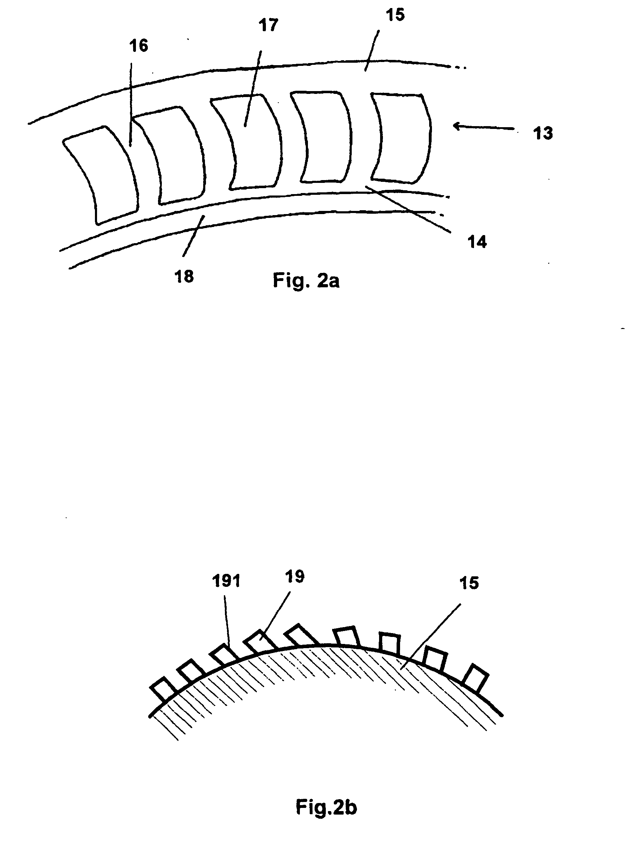

L'insert présenté à la figure 2 est réalisé en matériau élastomérique souple. Il comprend une base 14, de forme généralement annulaire et renforcée par une nappe (non représentée) orientée longitudinalement sensiblement à 0°, un sommet 15, sensiblement annulaire, avec sur sa paroi radialement extérieure des barrettes axiales 19 (figure 2b) et des parois 16 arquées. Entre les parois 16 se trouvent des évidements 17 qui peuvent traverser axialement complètement ou non l'insert 13. La base peut comporter une butée 18 à disposer du côté extérieur à proximité du bourrelet du pneumatique.

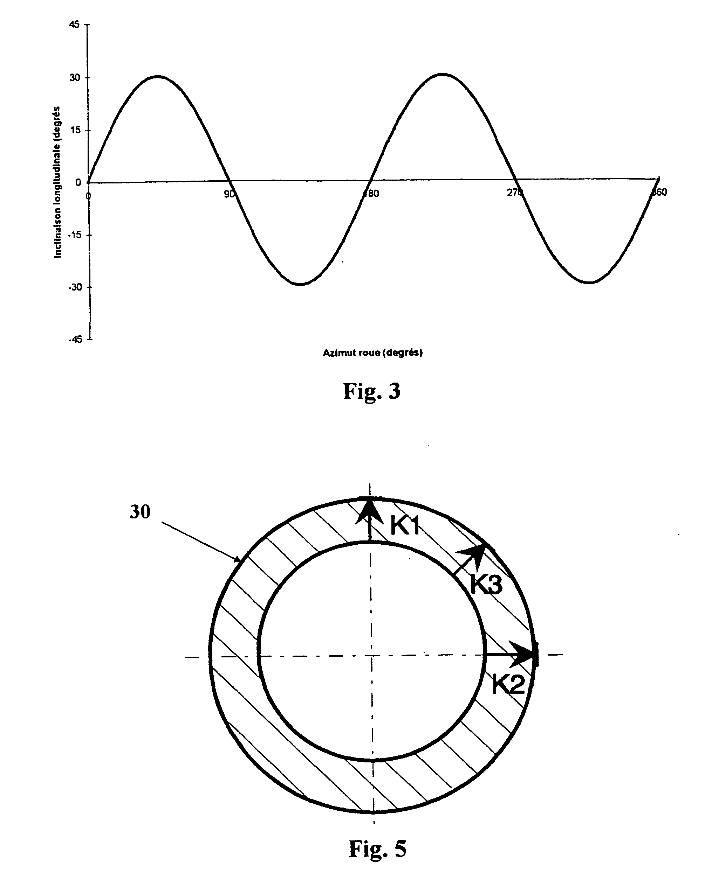

Les barrettes d'orientation axiales 19 présentent des flancs 191 dont l'inclinaison par rapport à la normale à la bande de roulement dans la direction longitudinale est variable en fonction de l'azimut tel que représenté à la figure 3. Cette inclinaison a une évolution sensiblement sinusoïdale sous-multiple d'ordre 2 du tour de l'insert. Lors d'un roulage en appui sur cet insert, les barrettes supportant le pneumatique vont s'écraser avec un léger déplacement longitudinal d'amplitude et de direction variable en fonction de l'inclinaison de ces barrettes. Ce déplacement va être transmis au pneumatique par adhérence entre l'insert et la surface intérieure du pneumatique et va entraîner l'apparition de fluctuations de vitesse de rotation instantanée de l'ensemble monté et donc de la roue. Ces fluctuations seront, dans le cas présenté, préférentiellement centrées sur l'harmonique 2 du spectre des vitesses de rotation de la roue. Un tel insert comporte donc un exemple de moyens pour générer des variations de vitesse de rotation de la roue qu'il équipe lors d'un roulage en appui.

On peut aussi obtenir un résultat similaire en faisant varier la raideur radiale de l'insert en fonction de l'azimut, ou son rayon.

La figure 4 représente un schéma d'insert 20 qui a une variation de rayon extérieur entre trois valeurs R1, R2 et R3 telles que R1>R2>R3 avec une variation progressive de ce rayon entre les maxima et les minima. Les deux zones de rayons extérieurs R1 sont à 180° l'une de l'autre et les deux zones de rayons R2 aussi ; les quatre minima de rayons R3 se trouvent chacun entre deux maxima R1 et R2. Il en résulte, lors d'un roulage en appui, une variation de ce rayon extérieur en fonction de α avec deux harmoniques fondamentales, la première de fréquence 2, due aux deux premiers maxima de rayon Rα et la seconde de fréquence 4 due à la présence des 4 maxima de rayons R1 et R2 et des quatre minima de rayon R3. Dans cet exemple, la différence R1 - R3 est égale à 5 mm et la différence R2 - R1 est égale à 3 mm.

La figure 5 représente un schéma d'insert 30 qui a une variation de raideur radiale entre trois valeurs K1, K2 et K3 telles que K1>K2>K3 avec une variation progressive de cette raideur entre les maxima et les minima. Comme précédemment, les deux zones de raideurs K1 sont à 180° l'une de l'autre et les deux zones de raideur K2 aussi ; les quatre minima de raideurs K3 se trouvent chacun entre deux maxima K1 et K2. Il en résulte, lors d'un roulage en appui, une variation de cette raideur en fonction de α avec deux harmoniques fondamentales, la première de fréquence 2, due aux deux premiers maxima de raideur K1 et la seconde de fréquence 4 due à la présence des 4 maxima de raideurs K1 et K2 et des quatre minima de raideur K3.

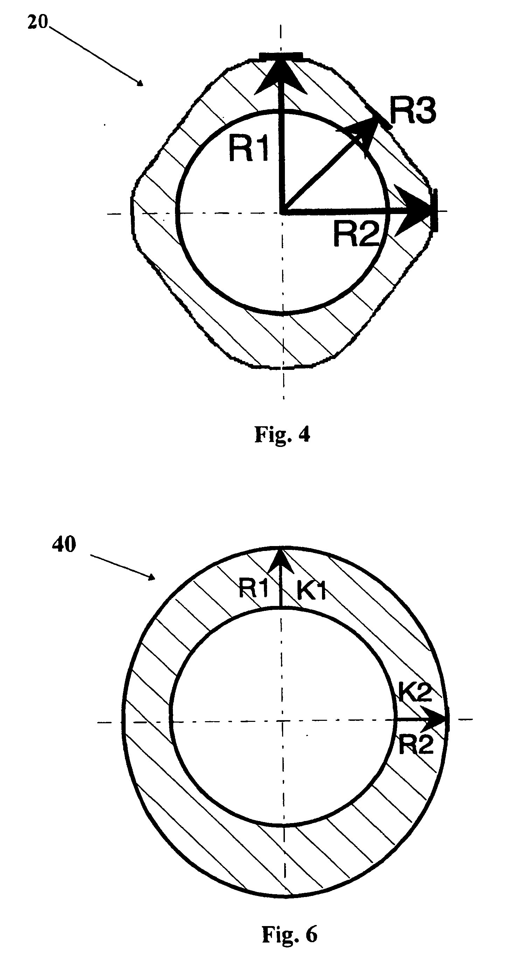

La figure 6 représente un schéma d'insert 40 qui présente une combinaison d'une variation de rayon extérieur et d'une variation de raideur radiale. Chaque caractéristique présente deux maxima (respectivement R1, K2) et deux minima (respectivement R2, K1), décalés angulairement de 90° les uns par rapport aux autres. Les maxima de raideur radiale sont suffisamment localisés pour procurer à l'ensemble de l'insert 40 une variation du rayon écrasé en appui comportant quatre maxima.

En conséquence, cet insert procure aussi une excitation harmonique concentrée sur les harmonique 2 et 4 mais présente l'avantage d'avoir une pondération variable en fonction de la vitesse. La demanderesse a en effet constaté que les variations radiales de raideur étaient plus perceptibles à basse vitesse et que les variations de rayon extérieur étaient elles plus perceptibles à haute vitesse.

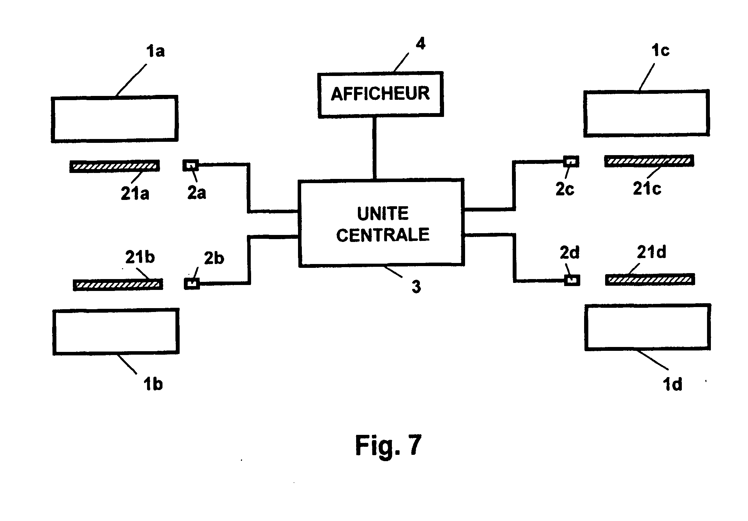

La figure 7 représente un véhicule équipé d'un dispositif de détection d'une condition de mise à plat selon l'invention. Le véhicule comporte quatre roues 1a, 1b, 1c et 1d équipées de pneumatiques. Chaque ensemble monté (pneumatique et roue) comporte des moyens pour générer des signaux vibratoires avertisseurs lors d'un roulage à plat du pneumatique, par exemple l'un des inserts de sécurité présentés aux figures 2 à 6. A proximité de chaque roue est disposé un capteur de déplacement angulaire 2a, 2b, 2c et 2d de la roue concernée. Chaque capteur est couplé à un disque cranté 21a, 21b, 21c et 21d respectivement, comme bien connu.. Les disques crantés 21a, 21b, 21c et 21d sont faits de disques magnétiques attachés coaxialement avec les roues correspondantes. Les capteurs 2a, 2b, 2c et 2d sont placés à proximité des disques crantés 21a, 21b, 21c et 21d à une distance telle que la rotation du disque cranté près du capteur crée un signal variable fonction du déplacement angulaire du disque cranté. La fréquence moyenne de ce signal donne la vitesse angulaire de rotation de la roue. Le signal variable de chaque capteur 2a, 2b, 2c et 2d est entré dans une unité centrale 3. L'unité centrale 3 comprend un analyseur de signaux qui analyse ces signaux. Le résultat de l'analyse est transmis à un afficheur 4 pour informer le conducteur du véhicule lorsqu'une condition de roulage à plat d'un pneumatique est repérée.

Lorsque le véhicule est équipé d'un dispositif anti-blocage de roues, les capteurs précédents 2 et l'unité centrale 3 peuvent être ceux de ce dispositif anti-blocage. Dans ces conditions, l'ensemble des étapes du procédé selon l'invention peut être assuré par un logiciel spécifique incorporé dans le calculateur du dispositif anti-blocage. Il convient de prévoir un afficheur 4 adapté.

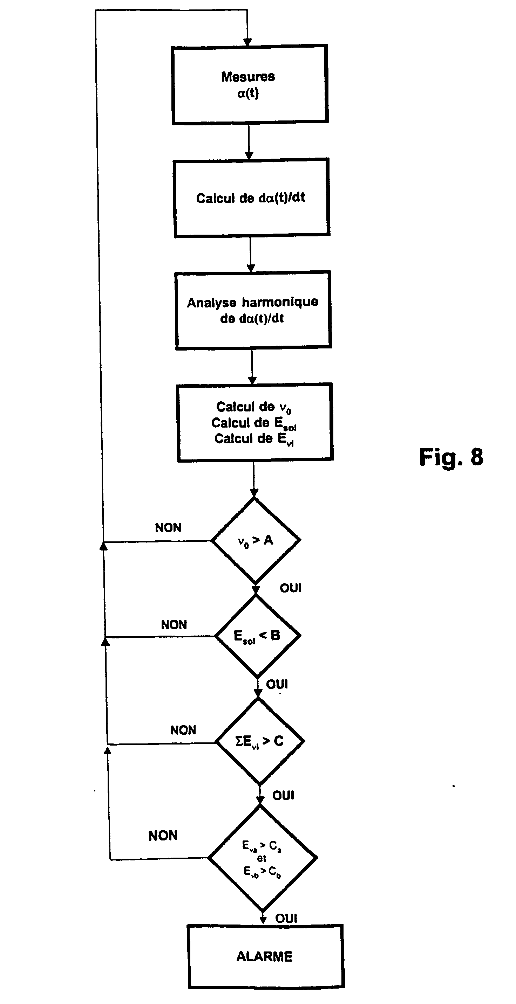

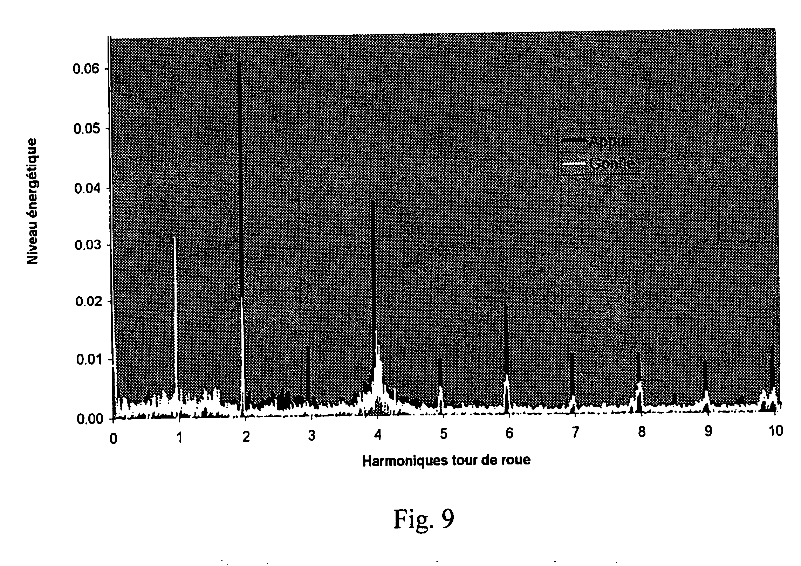

La figure 8 représente un schéma de principe du procédé de détection selon l'invention. A partir des mesures f(α,t) des capteurs 2a, 2b, 2c et 2d, l'unité centrale 3 effectue les opérations suivantes pour chaque roue :
- calculer dα(t)/dt correspondant à la vitesse angulaire de rotation de la roue ;
- effectuer une analyse harmonique de dα(t)/dt par des moyens connus, par exemple avec une transformée de Fourier, pour obtenir dα(ν)/dν (voir figure 9) ;
- déterminer la vitesse angulaire de rotation de la roue ν₀, correspondant à la fréquence de l'harmonique 1 ;
- déterminer l'énergie Eₛₒₗ du spectre des vitesses dα(ν)/dν dans une bande de fréquences n'incluant pas un harmonique du tour de roue, par exemple entre les harmoniques 5 et 6;
- déterminer les énergies du spectre des vitesses dα(ν)/dν dans deux bandes étroites de largeur de l'ordre de 2 à 10 Hz centrées sur les harmoniques 2 et 4, à savoir les énergies E_{ν2} et E_{ν4}, et effectuer leur somme pour obtenir ΣEᵥᵢ ;
- comparer ν₀ à un seuil A, et si ν₀ est inférieure à A recommencer le cycle de mesures ;
- si ν₀ est supérieure à A, comparer Eₛₒₗ à un seuil B, et si Eₛₒₗ est supérieur à B recommencer le cycle de mesures ;
- si Eₛₒₗ est inférieure à B, comparer ΣEᵥᵢ à un seuil C ; et
- si ΣEᵥᵢ est supérieur à C, déclencher une alarme, sinon recommencer le cycle.

Pour chaque harmonique analysé, un microprocesseur convenablement programmé calcule l'énergie de l'harmonique par l'intégrale du pic se dégageant du bruit de fond, le bruit de fond étant déterminé à partir d'une bande de fréquence encadrant la bande étroite analysée.

La valeur ΣEᵥᵢ est fonction de la vitesse du véhicule et du niveau d'énergie du spectre des vitesses lié aux irrégularités du sol. On peut ainsi avantageusement utiliser plusieurs valeurs du seuil C en fonction de la vitesse du véhicule et de la valeur de Eₛₒₗ.

Le premier test utilisant ν₀ revient à ne pas déclencher d'alarme lorsque la vitesse de rotation de la roue et donc la vitesse du véhicule est inférieure à un seuil donné, de l'ordre de 20 à 30 km/h.

Le second test revient à neutraliser aussi les alarmes lorsque l'énergie Eₛₒₗ est supérieure au seuil B, c'est-à-dire lorsque les irrégularités de la route sont très fortes et ainsi susceptibles de fortement perturber les mesures.

Ces deux tests permettent de limiter très sensiblement le nombre de fausses alarmes.

Comme il est toujours possible qu'un ou plusieurs pics soient perturbés par d'autres sources, par exemple les vibrations du moteur, il est utile de compléter cette analyse énergétique globale en vérifiant qu'au moins deux des harmoniques analysés ont eu une évolution énergétique significative. Ce complément améliore sensiblement la robustesse de la détection.

La figure 9 représente un exemple de spectre des vitesses des roues lors d'un roulage à pression de gonflage normale (courbe blanche) et en condition de roulage à plat en appui sur un insert de sécurité (courbe noire). Le véhicule est une Peugeot 405, roulant à 70 km/h sur un circuit usuel. Le pneumatique 12 considéré, lors d'un roulage en condition de roulage à plat, vient en appui sur la paroi radialement extérieure d'un insert de sécurité usuel ne comportant pas de moyens générant des signaux avertisseurs disposé autour de la jante de la roue. Un tel insert est décrit dans la demande de brevet EP 0 796 747.

La courbe blanche (roulage à pression de gonflage normale) présente un maximum notable centré sur l'harmonique 1. Cela explique qu'il est préférable d'exclure cet harmonique dans l'analyse du spectre de vibrations de la roue.

La courbe noire (roulage en appui) présente des niveaux énergétiques substantiellement supérieurs pour chaque harmonique à partir de l'harmonique 2. Cela illustre bien l'efficacité de l'analyse des harmoniques 2 et 4 pour détecter une condition de roulage à plat du pneumatique.

Le procédé de détection selon l'invention est déjà efficace lorsque le pneumatique vient en appui sur un insert de sécurité ne générant pas de signaux vibratoires avertisseurs. Mais, ce procédé est particulièrement bien adapté pour détecter une mise en appui sur des inserts comportant de tels moyens avertisseurs, et notamment des moyens générant des signaux harmoniques du tour de roue.

L'invention a aussi pour objet un pneumatique 50 équipé de moyens 60 générateurs de signaux vibratoires avertisseurs lors d'un roulage à flèche supérieure à un seuil donné.

Ce pneumatique 50 comprend un sommet 51, un flanc 52 et un bourrelet 53. Le flanc 52 et le bourrelet 53 sont équipés d'inserts 54, 55, 56 permettant à ce pneumatique de supporter sa charge lors d'un roulage à pression de gonflage nulle.

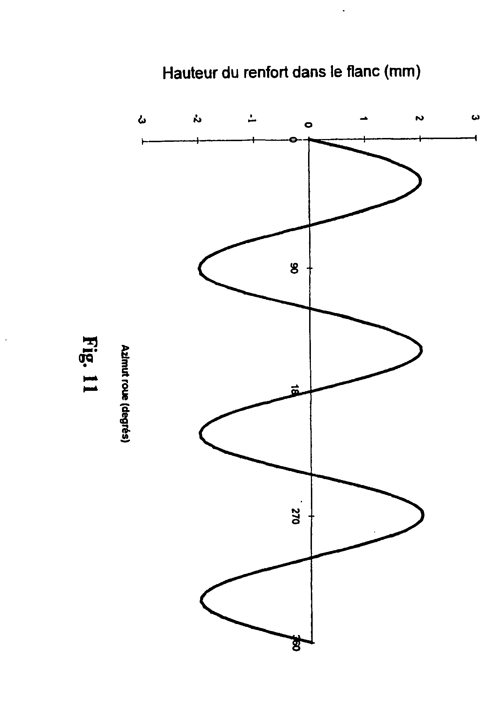

L'insert 54 comporte un renforcement 60 au niveau du bourrelet et du flanc dont la hauteur radiale varie selon une fonction harmonique de l'azimut telle que présentée à la figure 11. Ce renforcement 60 va entraîner, lors d'un roulage à une flèche supérieure à un seuil donné, une variation du rayon sous charge du pneumatique et l'apparition d'un signal harmonique multiple du tour de roue détectable par le dispositif et le procédé précédemment décrits. Le renforcement 60 peut être disposé sur les deux côtés du pneumatique ou sur un seul seulement. Dans ce dernier cas, il est préférable que ce soit le côté intérieur pour ne pas dégrader le comportement du pneumatique en virage. Cela a aussi l'avantage de ne pas déclencher d'alarme intempestive lors de virages pris à vive allure.

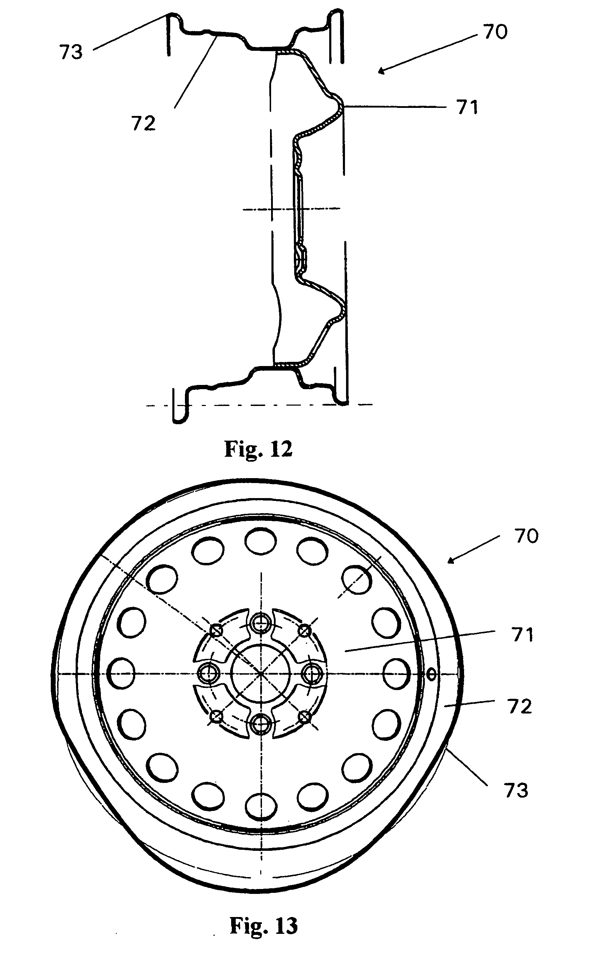

Les figures 12 et 13 représentent une roue 70 comportant un disque 71 et une jante 72 équipée de moyens pour générer des signaux vibratoires avertisseurs lors d'un roulage à plat.

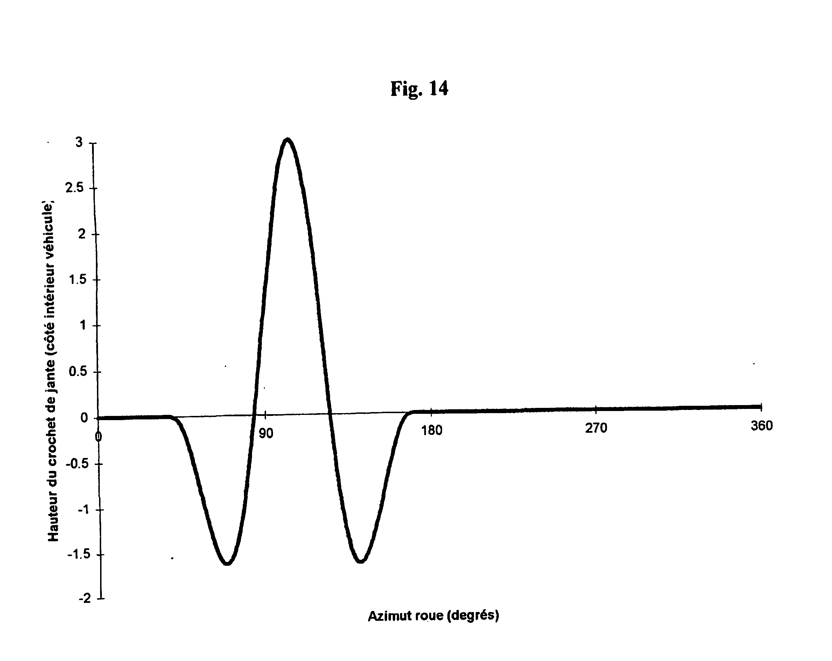

La jante 72 comprend notamment un crochet intérieur 73. La hauteur radiale de ce crochet intérieur 73 varie en fonction de son azimut selon une loi présentée à la figure 14. La variation concerne moins de la moitié de la circonférence.

La variation de hauteur radiale du crochet de jante peut aussi être obtenue par la fixation d'une pièce complémentaire.

En conséquence, lorsque la roue 70 est équipée d'un pneumatique usuel sous une charge ou avec une pression de gonflage telles que la flèche prise par le pneumatique est notablement supérieure aux conditions normales d'utilisation, la variation radiale de hauteur du crochet intérieur va entraîner l'apparition de signaux vibratoires avertisseurs. Ces signaux peuvent être détectés par le dispositif ou le procédé précédemment décrits.

Lors d'un roulage sous des conditions normales de charge et de pression de gonflage du pneumatique, donc de flèche, la modification du crochet de jante des figures 12 et 13 n'entraîne qu'une modification minime des conditions d'appui du bourrelet sur le crochet intérieur.

Comme précédemment, il est intéressant de disposer cette variation de hauteur radiale du crochet sur le crochet intérieur pour ne pas perturber le fonctionnement du pneumatique en virage et favoriser la détection en roulage en ligne droite.

## Revendications

1. Procédé de détection d'une condition de roulage à plat d'un pneumatique (12,50) d'un véhicule, ledit pneumatique (12,50) étant monté sur une roue (1,70), tel que :
- on capte une grandeur f(α,t) qui varie avec le déplacement angulaire de ladite roue (1,70) dans le temps ;
- on élabore, à partir de ladite grandeur, des signaux de mesure qui varient avec la vitesse angulaire de ladite roue (1,70) dα (t)/dt ;
- on calcule une grandeur caractéristique (Eᵥᵢ) de la dispersion des signaux de mesure ;
- on déclenche une alarme lorsque ladite grandeur caractéristique (Eᵥᵢ) satisfait une relation donnée;
et dans lequel
pour calculer la grandeur caractéristique (Eᵥᵢ) de la dispersion des signaux de mesure:
- on détermine la fréquence de rotation (υₒ) de ladite roue ; et
- on calcule l'énergie (Eᵥᵢ) desdits signaux de mesure dans au moins une bande étroite de fréquence (υᵢ) centrée sur l'un des premiers harmoniques (i) de ladite fréquence de rotation (υₒ) au delà de ladite fréquence de rotation et premier harmonique υₒ
**caractérisé en ce que** ladite grandeur f(h,t) est captée au moyen d'un capteur de déplacement angulaire de ladite roue.

2. Procédé de détection selon la revendication , dans lequel la fréquence de rotation de la roue (υₒ) est déterminée à partir desdits signaux de mesure.

3. Procédé de détection selon l'une des revendications 1 ou 2, dans lequel on calcule l'énergie desdits signaux de mesure dans au moins deux bandes étroites de fréquence (υᵢ) centrées chacune sur l'un des premiers harmoniques (i,j) de la fréquence de rotation de ladite roue, au delà de ladite fréquence de rotation et premier harmonique υ_{o.}

4. Procédé de détection selon l'une des revendications 1 à 3, dans lequel, après avoir détecté que la somme des énergies des signaux de mesure (ΣE_{υi}) dans au moins deux bandes étroites de fréquence (υᵢ, υⱼ) centrées chacune sur l'un des premiers harmoniques (i,j) satisfait une relation donnée, on compare l'énergie des signaux de mesure (Eυᵢ, Eυⱼ) dans chacune desdites bandes de fréquence à un seuil correspondant donné et on déclenche une alarme lorsque pour deux au moins desdites bandes de fréquences, l'énergie des signaux est supérieure audit seuil correspondant.

5. Procédé selon l'une des revendications 1 à 4, dans lequel on compare la ou les énergies des signaux de mesure (Eυᵢ,Eυⱼ) de la roue (1,70) dudit pneumatique (12,50) avec la ou les énergies des signaux de mesure (Eυᵢ, Eυⱼ) d'au moins l'une des autres roues (1,70) du véhicule et on déclenche une alarme lorsque le résultat de la comparaison satisfait une relation donnée.

6. Procédé de détection selon l'une des revendications 1 à 5, dans lequel on élabore des signaux de mesure qui varient avec l'accélération angulaire de la roue d²α(t)/dt².

7. Procédé de détection selon l'une des revendications 1 à 6, dans lequel ladite ou lesdites bandes étroites de fréquence ont une largeur inférieure ou égale à 10 hertz.

8. Procédé de détection selon l'une des revendications 1 à 7, dans lequel on calcule en plus l'énergie desdits signaux de mesure (Eₛₒₗ) dans au moins une seconde bande de fréquence où les signaux de mesure sont substantiellement indépendants de la condition de roulage à plat dudit pneumatique et on ne déclenche pas d'alarme lorsque l'énergie des signaux de mesure (Eₛₒₗ) dans ladite seconde bande de fréquence dépasse un seuil donné.

9. Procédé de détection selon la revendication 8, dans lequel ladite seconde bande de fréquence est située en dehors des fréquences multiples de la fréquence de rotation (υₒ) de ladite roue (1,70).

10. Procédé de détection selon l'une des revendications 1 à 9, dans lequel on ne déclenche pas d'alarme lorsque la vitesse dudit véhicule est inférieure à un seuil donné.

11. Procédé de détection selon l'une des revendications 1 à 10, dans lequel on identifie et on transmet au conducteur du véhicule la position du pneumatique (12,50) en condition de roulage à plat.

12. Procédé de détection selon l'une des revendications 1 à 11, dans lequel, le véhicule comportant un dispositif anti-blocage des roues, les signaux de mesure sont élaborés à partir des capteurs dudit dispositif anti-blocage des roues.

13. Dispositif de détection d'une condition de roulage à plat d'un pneumatique (12,50) d'un véhicule, ledit pneumatique étant monté sur une roue (1,70), comportant :
- des premiers moyens (2,21) pour capter une grandeur f(α,t) qui varie avec le déplacement angulaire de la roue dans le temps ;
- des seconds moyens (3) pour mettre en oeuvre le procédé de détection selon l'une des revendications 1 à 12;
- des troisièmes moyens (4) pour transmettre au conducteur du véhicule ladite alarme ; et
- des quatrièmes moyens (19,191,60,73) disposes dans l'ensemble monté pneumatique/roue pour générer des signaux vibratoires avertisseurs générant au moins une fonction sinusoïdale dont la période est un sous-multiple du tour de roue lors d'un roulage à plat du pneumatique (12,50).

14. Dispositif selon la revendication 13, dans lequel lesdits moyens (19,191,60,11) pour générer des signaux vibratoires avertisseurs génèrent sensiblement une seule fonction sinusoïdale dont la période est un sous-multiple du tour de roue.

15. Dispositif selon l'une des revendications 13 ou 14, dans lequel, le véhicule étant équipé d'un dispositif anti-blocage des roues, les premier et second moyens sont constitués par les capteurs (2,21) et le calculateur (3) dudit dispositif anti-blocage des roues.

## Patentansprüche

1. Verfahren zur Detektion einer Plattlaufsituation eines Luftreifens (12, 50) eines Fahrzeugs, wobei der Luftreifen (12, 50) auf ein Rad (1, 70) montiert ist und wobei das Verfahren so ist, dass:
- eine Größe f(α,t) erfasst wird, die sich zeitlich mit der Winkelverschiebung des Rads (1, 70) ändert,
- ausgehend von dieser Größe Messsignale erzeugt werden, die sich mit der Winkelgeschwindigkeit des Rads (1, 70) dα(t)/dt ändern,
- eine charakteristische Größe (E_{υi}) der Streuung der Messsignale berechnet wird und
- ein Alarm ausgelöst wird, wenn die charakteristische Größe einer gegebenen Beziehung entspricht,
und wobei in dem Verfahren zur Berechnung der charakteristischen Größe (E_{υi}) der Streuung der Messsignale:
- die Drehfrequenz (υ₀) des Rads bestimmt und
- die Energie (E_{υi}) der Messsignale in zumindest einem schmalen, um eine der ersten Harmonischen (*i*) der Drehfrequenz (υ₀) zentrierten Frequenzband (υᵢ) über der Dreh-und Grundschwingungsfrequenz (υ₀) berechnet wird;
**dadurch gekennzeichnet, dass** die Größe f(α,t) mit einem Messfühler für die Winkelverschiebung des Rads erfasst wird.

2. Verfahren zur Detektion nach Anspruch 1, wobei die Drehfrequenz (υ₀) des Rads aus den Messsignalen bestimmt wird.

3. Verfahren zur Detektion nach einem der Ansprüche 1 oder 2, wobei die Energie der Messsignale in mindestens zwei schmalen, um eine der ersten Harmonischen (*i*, *j*) der Drehfrequenz des Rads zentrierten Frequenzbändern (υᵢ, υⱼ) über der Dreh- und Grundschwingungsfrequenz (υ₀) berechnet wird.

4. Verfahren zur Detektion nach einem der Ansprüche 1 bis 3, wobei dann, wenn festgestellt worden ist, dass die Summe der Energien der Messsignale (ΣE_{υi}) in mindestens zwei schmalen Frequenzbändern (υᵢ, υⱼ), die jeweils um eine der ersten Harmonischen (*i*, *j*) zentriert sind, einer gegebenen Beziehung entspricht, die Energie der Messsignale (E_{υi}, E_{υj}) in den einzelnen Frequenzbändern jeweils mit einem gegebenen entsprechenden Schwellenwert verglichen wird und ein Alarm ausgelöst wird, wenn bei mindestens zwei der Frequenzbänder die Energie der Signale über dem entsprechenden Schwellenwert liegt.

5. Verfahren nach einem der Ansprüche 1 bis 4, wobei die Energie oder die Energien der Messsignale (E_{υi}, E_{υj}) des Rads (1, 70) des Luftreifens (12, 50) mit der Energie oder den Energien der Messsignale (E_{υi}, E_{υj}) mindestens eines der anderen Räder (1, 70) des Fahrzeugs verglichen werden und ein Alarm ausgelöst wird, wenn das Ergebnis des Vergleichs einer gegebenen Beziehung entspricht.

6. Verfahren zur Detektion nach einem der Ansprüche 1 bis 5, wobei Messsignale erzeugt werden, die sich mit der Winkelbeschleunigung des Rads d²α(t)/dt² ändern.

7. Verfahren zur Detektion nach einem der Ansprüche 1 bis 6, wobei das schmale Frequenzband oder die schmalen Frequenzbänder eine Breite von kleiner oder gleich 10 Hertz aufweisen.

8. Verfahren zur Detektion nach einem der Ansprüche 1 bis 7, wobei zusätzlich die Energie der Messsignale (E_{Boden}) in mindestens einem zweiten Frequenzband berechnet wird, in dem die Messsignale im Wesentlichen unabhängig von der Plattlaufsituation des Luftreifens sind, und kein Alarm ausgelöst wird, wenn die Energie der Messsignale (E_{Boden}) in dem zweiten Frequenzband eine gegebene Schwelle überschreitet.

9. Verfahren zur Detektion nach Anspruch 8, wobei das zweite Frequenzband außerhalb der Frequenzvielfachen der Drehfrequenz (υ₀) des Rads (1, 70) liegt.

10. Verfahren zur Detektion nach einem der Ansprüche 1 bis 9, wobei kein Alarm ausgelöst wird, wenn die Geschwindigkeit des Fahrzeugs unter einer gegebenen Schwelle liegt.

11. Verfahren zur Detektion nach einem der Ansprüche 1 bis 10, wobei die Position des Luftreifens (12, 50), der ohne Luft läuft, identifiziert und an den Fahrer des Fahrzeugs weitergeleitet wird.

12. Verfahren zur Detektion nach einem der Ansprüche 1 bis 11, wobei für den Fall, dass das Fahrzeug eine Antiblockier-Vorrichtung für die Räder besitzt, die Messsignale mit Hilfe der Messfühler dieser Antiblockier-Vorrichtung für die Räder erzeugt werden.

13. Vorrichtung zur Detektion einer Plattlaufsituation eines Luftreifens (12, 50) eines Fahrzeugs, wobei der Luftreifen auf ein Rad (1, 70) montiert ist und wobei die Vorrichtung aufweist:
- erste Elemente (2, 21) zum Erfassen einer Größe f(α,t), die sich zeitlich mit der Winkelverschiebung des Rads ändert,
- zweite Elemente (3) zur Durchführung des Detektionsverfahrens nach einem der Ansprüche 1 bis 12,
- dritte Elemente (4) zur Übermittlung des Alarms an den Fahrer des Fahrzeugs und
- vierte Elemente (19, 191, 60, 73), die in der montierten Luftreifen/Rad-Einheit angeordnet sind, zur Erzeugung von Schwingungssignalen zur Erfassung, die zumindest eine Sinusfunktion hervorbringen, deren Periode ein ganzzahliger Teil der Radabrollzeit ist, wenn der Luftreifen (12, 50) ohne Luft fährt.

14. Vorrichtung nach Anspruch 13, wobei die Elemente (19, 191, 60, 73) zur Erzeugung von Schwingungssignalen zur Erfassung im Wesentlichen eine einzige Sinusfunktion hervorbringen, deren Periode ein ganzzahliger Teil der Radabrollzeit ist.

15. Vorrichtung nach einem der Ansprüche 13 oder 14, wobei für den Fall, dass das Fahrzeug mit einer Antiblockier-Vorrichtung für die Räder ausgestattet ist, die ersten und die zweiten Elemente von den Messfühlern (2, 21) und dem Rechner (3) der Antiblockier-Vorrichtung für die Räder gebildet werden.

## Claims

1. A method for detecting a run-flat condition of a vehicle tyre (12, 50), said tyre (12, 50) being mounted on a wheel (1, 70), such that:
- a variable f(α,t) is sensed which varies with the angular displacement of said wheel (1, 70) over time;
- measuring signals which vary with the angular speed of said wheel (1, 70) dα (t)/dt are developed from said variable;
- a characteristic variable (Eᵥᵢ) of the dispersion of the measuring signals is calculated;
- an alarm is triggered when said characteristic variable satisfies a given relationship; and in which, to calculate the characteristic variable (Eᵥᵢ) of the dispersion of the measuring signals:
- the frequency of rotation (ν₀) of said wheel is determined; and
- the energy (Eᵥᵢ) of said measuring signals is calculated in at least one narrow frequency band (νᵢ) centred on one of the first harmonics (*i*) of said frequency of rotation (ν₀) beyond said frequency of rotation and first harmonic (ν₀);
**characterised in that** said variable f(α, t) is sensed by means of a sensor for the angular displacement of said wheel.

2. A detection method according to Claim 1, in which the frequency of rotation of the wheel (ν₀) is determined from said measuring signals.

3. A detection method according to one of Claims 1 or 2, in which the energy of said measuring signals is calculated in at least two narrow frequency bands (νᵢ, νⱼ) each centred on one of the first harmonics (*i, j*) of the frequency of rotation of said wheel, beyond said frequency of rotation and first harmonic (ν₀).

4. A detection method according to one of Claims 1 to 3, in which, after having detected that the total of the energies of the measuring signals (ΣEᵥᵢ) in at least two narrow frequency bands (νᵢ, νⱼ) each centred on one of the first harmonics (*i, j*) satisfies a given relationship, the energy of the measuring signals (Eᵥᵢ, Eᵥⱼ) in each of said frequency bands is compared to a given corresponding threshold and an alarm is triggered when, for at least two of said frequency bands, the energy of the signals is greater than said corresponding threshold.

5. A method according to one of Claims 1 to 4, in which the energy or energies of the measuring signals (Eᵥᵢ, Eᵥⱼ) of the wheel (1, 70) of said tyre (12, 50) is/are compared with the energy or energies of the measuring signals (Eᵥᵢ, Rᵥⱼ) of at least one of the other wheels (1, 70) of the vehicle and an alarm is triggered when the result of the comparison satisfies a given relationship.

6. A detection method according to one of Claims 1 to 5, in which measuring signals are developed which vary with the angular acceleration of the wheel d²α(t)/dt².

7. A detection method according to one of Claims 1 to 6, in which said narrow frequency band or bands has/have a width less than or equal to 10 Hertz.

8. A detection method according to one of Claims 1 to 7, in which furthermore the energy of said measuring signals (Eₛₒₗ) is calculated in at least one second frequency band in which the measuring signals are substantially independent of the run-flat condition of said tyre and no alarm is triggered when the energy of the measuring signals (Eₛₒₗ) in said second frequency band exceeds a given threshold.

9. A detection method according to Claim 8, in which said second frequency band is located outside the multiple frequencies of the frequency of rotation (ν₀) of said wheel (1, 70).

10. A detection method according to one of Claims 1 to 9, in which no alarm is triggered when the speed of said vehicle is less than a given threshold.

11. A detection method according to one of Claims 1 to 10, in which the position of the tyre (12, 50) in a run-flat condition is identified and transmitted to the driver of the vehicle.

12. A detection method according to one of Claims 1 to 11, in which, the vehicle comprising a wheel antilock device, the measuring signals are developed from the sensors of said wheel antilock device.

13. A system for detecting a run-flat condition of a vehicle tyre (12, 50), said tyre being mounted on a wheel (1, 70), comprising:
- first means (2, 21) for sensing a variable f(α,t) which varies with the angular displacement of the wheel over time;
- second means (3) for implementing the detection method according to one of Claims 1 to 12;
- third means (4) for transmitting said alarm to the driver of the vehicle; and
- fourth means (19, 191, 60, 73) arranged in the tyre/wheel mounted assembly for generating vibrating warning signals which generate at least one sinusoidal function the period of which is a sub-multiple of the turn of the wheel when running with a flat tyre (12, 50).

14. A system according to Claim 13, in which said means (19, 191, 60, 73) for generating vibrating warning signals substantially generate a single sinusoidal function the period of which is a sub-multiple of the turn of the wheel.

15. A system according to one of Claims 13 or 14, in which, the vehicle being fitted with a wheel antilock device, the first and second means are formed by the sensors (2, 21) and the calculator (3) of said wheel antilock device.
